# EUROPÄISCHE PATENTSCHRIFT

(11) **EP 1 099 726 B1**
(45) Veröffentlichungstag und Bekanntmachung des Hinweises auf die Patenterteilung: **01.06.2005**
(21) Anmeldenummer: 00122572.1
(22) Anmeldetag: 17.10.2000
(51) Int. Cl.: C08L 61/28, C08G 12/32, C09D 161/28

(54) **Melaminharzdispersionen**
Melamine resin dispersions
Dispersions de résine mélamine

(30) Priorität: 11.11.1999 DE 19954189
(43) Veröffentlichungstag der Anmeldung: 16.05.2001
(73) Patentinhaber: BASF AKTIENGESELLSCHAFT, 67056 Ludwigshafen (DE)
(72) Erfinder: Biedermann, Norbert, Dr., 67251 Freinsheim (DE); Scherr, Günter, Dr., 67065 Ludwigshafen (DE); Jäckh, Christof, Dr., 69120 Heidelberg (DE); Decher, Jakob, 67240 Bobenheim-Roxheim (DE); Andre, Valerie, Dr., 67550 Worms (DE); Schnurr, Werner, Dr., 67273 Herxheim am Berg (DE); Hennig, Ingolf, Dr., 68809 Neulussheim (DE)

(56) Entgegenhaltungen:
- EP-A- 0 443 428
- EP-A- 0 733 686
- DE-A- 3 741 282

## Beschreibung

Die vorliegende Erfindung betrifft wässrige Melaminharzdispersionen enthaltend als diskontinuierliche Phase ein Melaminharz, welches mit einer Kombination aus einem kationischen Schutzkolloid und einem anionischen Schutzkolloid stabilisiert ist.

Weiterhin betrifft die Erfindung Zubereitungen, die diese Dispersionen enthalten, Dekorfolien, die mit diesen Zubereitungen beschichtet sind, Holzwerkstoffe, die mit diesen Dekorfolien beschichtet sind sowie Verfahren zur Herstellung der Melaminharzdispersionen, Dekorfolien und beschichteten Holzwerkstoffen.

Melaminharzlösungen aus Melamin und Formaldehyd sind allgemein bekannt, beispielsweise aus Kunststoff-Handbuch, 2. Auflage, 1988, Band 10, S. 41 bis 49.

Häufig stellt man aus ihnen durch Imprägnierung und Beschichtung von Papier Melaminharzfolien her, die u.a. zur Beschichtung von Holzwerkstoffen in der Möbelindustrie Verwendung finden.

An die Melaminharze und an die daraus hergestellten Produkte werden von der verarbeitenden Industrie und den Endverbrauchern verschiedene Anforderungen gestellt, was die Verarbeitungs- als auch was die Endeigenschaften der Melaminharze und daraus hergestellten Produkte betrifft.

Nach dem Stand der Technik wird eine Bahn eines Dekorpapiers in einem ein- oder zweistufigen Verfahren mit einem Melaminharzkondensat imprägniert, getrocknet und anschließend unter Druck und Hitzeeinwirkung auf eine Trägerplatte laminiert. Beim einstufigen Verfahren sind das das Papier füllende und die versiegelnde Oberfläche bildende Harz identisch. Beim zweistufigen Imprägnierverfahren wird zunächst das Dekorpapier mit 50-100 % Festharz (bezogen auf das Papiergewicht) gefüllt und nach optionaler Vortrocknung weiteres Harz durch Tauchen, Rakeln oder Streichen auf die Ober- und/oder Unterseite der Papierbahn aufgebracht. Hierdurch ist es möglich, unterschiedliche Tränkharzqualitäten in beiden Imprägnierstufen zu verwenden. Zur Füllung der Papierbahn werden vorzugsweise billigere Harnstoff-Formaldehyd-Tränkharze oder Mischungen aus Harnstoff-Formaldehyd- und Melamin-Formaldehyd-Tränkharzen eingesetzt. Die für die Produkteigenschaften maßgebliche Deckschicht besteht vorzugsweise aus reinem Melaminharz.

Was die Verarbeitbarkeit der Melaminharze betrifft, so wird insbesondere gewünscht, daß die Melaminharze auch nach längerer Lagerung gut wasserverdünnbar sind, d.h. sie sollen beim Verdünnen mit Wasser kein klebriges Koagulat bilden. Eine gute Wasserverdünnbarkeit ist wichtig, weil diese Eigenschaft Bedingung für ein leichtes Reinigen von Transportbehältern und Verarbeitungsmaschinen ist. Weiterhin wird gewünscht, daß die Melaminharze beim Trocknen der imprägnierten Papierbahn keine Haut bilden. Eine vorzeitiges Verfilmen der Harzoberfläche bzw. eine Hautbildung ist deshalb nachteilig, weil dadurch der weitere Trocknungsprozeß behindert und die Trocknungsgeschwindigkeit reduziert wird. Für die Verarbeiter ist jedoch eine möglichst schnelle Trocknung und damit hohe Produktivität von hohem Interesse.

Was die Gebrauchseigenschaften der mit den Melaminharzen hergestellten Folien betrifft, so sollen diese eine gewisse Elastizität aufweisen, damit sich mit ihnen auch strukturierte und profilierte Flächen von Holzwerkstoffteilen beschichten lassen, ohne daß es zu einer Rißbildung in den aufgepreßten Folien kommt. Außerdem soll die Elastizität groß genug sein, damit Quellungs- und Schwundvorgänge im Holzwerkstoff, wie sie beispielsweise bei der Veränderung des Raumklimas auftreten können, ebenfalls nicht zu einer Oberflächenrißbildung führen. Neben einer solchen Rißbeständigkeit sollen die aufgepreßten Melaminharzfolien zusätzlich gegen Feuchtigkeit und insbesondere Wasserdampf unempfindlich sein.

Zudem sollen die Oberflächenbeschichtungen einen möglichst brillanten Farbeindruck vermitteln. Dem steht jedoch häufig entgegen, daß die zur Imprägnierung der Dekorpapiere eingesetzten Harze beim Aushärten vergrauen und zur Ausbildung von weißen Ausblühungen neigen und so den Farbeffekt von farbig bedruckten oder eingefärbten Dekorpapieren dämpfen. Dies tritt insbesondere bei schwarzen Dekorpapieren in Erscheinung, die dann häufig nicht mehr den gewünschten "Schwarzgrad" aufweisen.

Weiterhin wird von den Möbelherstellern gefordert, daß die mit den Melaminharzen hergestellten Imprägnate beim Aufpressen auf Möbelteile hochglänzende Oberflächen bilden.

Die aus dem Stand der Technik bekannten Melaminharz Lösungen vermögen dieses Anforderungsprofil im allgemeinen bereits recht gut zu erfüllen. Allerdings erscheinen diese Harzlösungen was die Wasserverdünnbarkeit nach Lagerung betrifft, noch verbesserungsbedürftig. Weiterhin wird als nachteilig angesehen, daß die Harzlösungen nach dem Auftragen auf das zu beschichtende Dekorpapier vorzeitig verfilmen, was zur Beeinträchtigung des Trocknungsvorganges in Form von Blasen- oder Staubbildung bzw. reduzierten Maschinengeschwindigkeiten und Störungen der Folienoberflächen führen kann.

Weiterhin sind aus dem Stand der Technik wässerige Dispersionen von Melaminharzen, die bereits vollständig oder teilweise ausgehärtet sind, bekannt.

Ein ähnliches Verfahren zur Herstellung von Benzoguanamain-Melamin-Formaldehyd Partikeln beschreibt die US 3,945,980. Hier wird das Aminoharzvorkondensat bis zur Überschreitung seiner Wasserverträglichkeitsgrenze unter Beigabe von Polyvinylalkohol verdünnt und thermisch und sauer gehärtet.

Weiterhin wird die Herstellung von Melaminharzpartikeln in den europäischen Patentschriften EP 0 415 273 und EP 0 363 752 beschrieben. Als Ausgangsmaterial wird hier ein methanolverethertes Melaminharz eingesetzt und in Anwesenheit eines sulfonsäurehaltigen Polymers sauer und thermisch bei Konzentrationen von ca. 7 % vernetzt. Diese Melaminharze sind zur Herstellung von Dekorfolien praktisch ungeeignet, da sie bei der Herstellung der Folien oder der beschichteten Holzwerkstoffe Methanol freisetzen, was aus Gründen der Arbeitshygiene inakzeptabel ist.

Ähnliche Verfahren wie die obigen sind in DD 224 602, JP 11021355, SU 441 272, JP 62068811, DD 248803 und DE 3 628 244 beschrieben. In allen Fällen bilden sich voll gehärtete, unschmelzbare und unlösliche Duroplastpulver unterschiedlichster Korngröße, die als Kalibriermaterial, Pigment, Rheologiemodifikator, Füller, Flammschutzmittel und Mattierungsmittel empfohlen werden. Die Raum-Zeit-Ausbeuten sind in allen Fällen unbefriedigend und die Teilchengrößen sind bedingt durch den Einsatz der beschriebenen Schutzkolloidsysteme zum Teil stark streuend.

Die Herstellung von Melaminharzpartikeln ist weiterhin aus der US 3,428,607 bekannt. Es wird die Herstellung ausgehärteter Melaminharzpartikel durch Einrühren eines MF-Vorkondensates in eine wässrige Lösung von Schutzkolloiden wie Carboxymethylcellulose, Gelatine, Agar-Agar, Stärke oder Alginate bei Melaminharzkonzentrationen von 0,01 %-10 % und Reaktion bei pH: 6-8 und Siedetemperatur des Lösungsmittels beschrieben.

Aus der US 5344704 sind wässrige Mischungen, die vorgehärtete Melaminharzpartikel sowie ein weiteres Bindemittel (z.B. Na-Alginat oder microkristalline Cellulose) enthalten, bekannt. Durch Imprägnierung oder Beschichtung von Dekorpapieren mit dieser Mischung, Trocknung, Imprägnierung mit Melaminharzlösungen und anschließendes Aushärten werden hieraus Folien hergestellt, die zur Oberflächenbeschichtung eingesetzt werden. Diese Mischungen werden hergestellt, indem man ein Melaminharz teilweise oder ganz aushärtet und anschließend auf eine mittlere Teilchengröße von ca. 50 µm mahlt und zusammen mit einem Schutzkolloid in Wasser oder einer Melaminharzlösung dispergiert. Nachteilig an diesem Verfahren ist insbesondere, daß die Dispersionen wegen der Größe der Harzpartikel rasch koagulieren. Zudem ist das Mahlen des teilgehärteten Harzes technisch aufwendig.

Die WO 97/07152 beschreibt ein Verfahren zur Herstellung von wässrigen Dispersionen, die vollständig oder teilweise ausgehärtete Melaminharze enthalten. Hierzu wird eine wässrige Melaminharzlösung mit einer wässrigen Suspension eines wasserunlöslichen Schutzkolloids, z.B. mikrokristalline Cellulose versetzt, wobei das Melaminharz durch Überschreitung seiner Löslichkeitsgrenze ausfällt und eine stabile Dispersion entsteht. Diese Mischung wird anschließend gegebenenfalls weiter umgesetzt, damit das Melaminharz den gewünschten Härtungsgrad erreicht. Die auf diese Weise gewonnen Melaminharzteilchen weisen eine mittlere Teilchengröße von unter 1 µm bis 700 µm auf. Es wird weiterhin darauf hingewiesen, daß Seifen und übliche wasserlösliche Schutzkolloide zur Herstellung geeigneter Melaminharzpartikel nicht geeignet seien, da dies im Falle der Seifen zu technischen Problemen bei der Herstellung der Melaminharzdispersionen und im Falle der Schutzkolloide zu feinteiligen, in ihrer Größe uneinheitlichen Dispersionen führt. Die mit wasserunlöslichen Schutzkolloiden wie mikrokristalliner Cellulose stabilisierten Melaminharzdispersionen weisen hingegen den Nachteil auf , daß sie nur mit geringen Feststoffgehalten unter 40% hergestellt werden können, da die eingesetzte mikrokristalline Cellulose bereits ab einer Konzentration von 3% zur Bildung eines thixotropen Gels führt. Bei Konzentrationen von mehr als 40% bezogen auf die Summe aus Melamin und Formaldehyd läßt sich mit mikrokristalliner Cellulose keine feinteilige Dispersion mit Teilchengrößen unter 30 µm mehr herstellen. Mikrokristalline Cellulose ist zudem als teuerer Einsatzstoff bekannt.

Die Aufgabe der vorliegenden Erfindung bestand also darin, Melaminharzdispersionen bereitzustellen, die die Nachteile des Standes der Technik nicht aufweisen und insbesondere die Herstellung von Folien mit überlegenen Oberflächeneigenschaften wie Glanz, Geschlossenheit ermöglichen.

Demgemäß wurden die eingangs definierten Melaminharz Dispersionen, Zubereitungen, Dekorfolien und Holzwerkstoffe, sowie Verfahren zu deren Herstellung gefunden.

Die erfindungsgemäßen Melaminharzdispersionen werden im allgemeinen hergestellt aus
a) Melamin
b) pro Mol Melamin 1,3 bis 3,0 mol Formaldehyd
c) gegebenenfalls pro Mol Melamin bis 0,5 mol Harnstoff und
d) gegebenenfalls pro Mol Melamin 0,01 bis 0,3 mol einer sonstigen Verbindung, die fähig ist, mit Formaldehyd in einer Polykondensationsreaktion zu reagieren.

Das Melamin (Komponente a) wird üblicherweise in fester Form eingesetzt.

Der Formaldehyd (Komponente b) wird bevorzugt in Form einer 30 bis 50 gew.-%igen wäßrigen Lösung oder in Form von Paraformaldehyd eingesetzt.

Der Harnstoff (Komponente c) wird ebenfalls fest, in Form einer wässerigen Lösung oder in Form eines Vorkondensates mit dem Formaldehyd eingesetzt.

Als Komponenten (d) kommen vor allem solche in Betracht, die gegebenenfalls zusammen mit Formaldehyd bei der Herstellung von Aminoplastharzen eingesetzt werden (vgl. Ullmanns Encyklopädie der technischen Chemie, 4. Auflage, Band 7, S. 403 bis 422), also z.B. Dicyandiamid und Guanamine wie Benzoguanamin und Acetoguanamin. Bisguanamine wie Adipo-, Glutaro- oder Methylolglutarobisguanamin sowie Verbindungen, welche mehrere, z.B. kondensierte Aminotriazin Kerne enthalten, sind ebenfalls geeignet.

Als Elastifizierungsmittel (Komponente e) kommen folgende Einsatzstoffe in Betracht:
- ein- oder mehrwertige Alkohole, z.B. tert-Butanol, Ethylenglykol, Diethylenglykol, Triethylenglykol, Polyethylenglykole, Butandiole, Pentandiole, Hexandiole, Trimethylolpropan, Neopentylglycol und Sorbitol
- Aminoalkohole, z.B. Ethanolamin, Diethanolamin und Triethanolamin
- Amide und Lactame, z.B. Formamid, Methylformamid, Dimethylformamid, Harnstoff, Methylharnstoffe, cyclische Harnstoffe, Thioharnstoff, Polyharnstoffe, C3- bis C9-Lactame
- Ethanolamide, z.B. Ameisensäureethanolamid, Essigsäureethanolamid, Trishydroxyethylisocyanurat-Hydroxyethylharnstoff
- die vorgenannten Verbindungen in ethoxylierter Form, wobei diese Verbindungen im Mittel bevorzugt 1 bis 20 Ethylenoxideinheiten tragen, insbesondere zählen hierzu ethoxyliertes Caprolactam, ethoxyliertes Oligo- oder Polycaprolactam mit im Mittel 1 bis 10 Ethylenoxideinheiten pro Caprolactameinheit und ferner ethoxyliertes Melamin
- 2-(5-Hydroxy-3-oxapentylamin)-1,3,5-triazin, 2,4-Di-(5-hydroxy-3-oxapentylamin)-1,3,5-triazin, 2,4,6-Tris-(5-hydroxy-3-oxapentylamin)-1,3,5-triazin (THOM) oder Gemische dieser Verbindungen (HOM) und
- ferner die in der EP-A-800543 genannten Elastifizierungsmittel.

Als kationisches Schutzkolloid kommen insbesondere kationische Stärke, quaterniertes Polyvinylimidazol bzw. seine Mischpolymerisate mit z.B. Vinylpyrrolidon, quaternierte Polyethylenimine und Polyvinylamine in Betracht.

Bei dem anionischen Schutzkolloid handelt es sich bevorzugt um ein Copolymer aus Acrylsäure, Acrylsäuremethylester und 2-Acrylamido-2-methylpropansulfonsäure. Weiterhin geeignet sind folgende Verbindungen: Polyacrylsäure-Na-Salz, Polymaleinsäure-Na-Salz, die Na-Salze von Copolymeren der Acryl- und Maleinsäure, Phenolsulfonsäure-Formaldehyd-Kondensate, Naphthalinsulfonsäure-Formaldehyd-Kondensate, anionische Stärken.

Das anionische und das kationische Schutzkolloid wird üblicheweise in einer Gesamtmenge von 0,02 bis 6, bevorzugt 0,5 bis 3 Gew.-%, bezogen auf die Gesamtmenge an zur Herstellung des Melaminharzes eingesetztem Melamin und Formaldehyd, eingesetzt. Das Gewichtsverhältnis an anionischem zu kationischem Schutzkolloid beträgt üblicherweise 0,02 : 1 bis 50 : 1 bevorzugt 0,1 : 1 bis 10 : 1.

Die Melaminharzdispersionen werden im allgemeinen hergestellt, indem man
1. in Schritt 1 zunächst aus den Komponenten a) bis d) gegebenenfalls in Anwesenheit des anionischen und des kationischen Schutzkolloids zunächst eine wässrige Lösung eines Melaminharzes herstellt und bei einem pH-Wert von 7 bis 10, bevorzugt bei 7,2 bis 9 und einer Temperatur von 50 bis 140, bevorzugt 90 bis 120, besonders bevorzugt 60 bis 100°C weiter umsetzt, bis eine Trübung einsetzt, wobei man das anionische und des kationische Schutzkolloid spätestens beim Einsetzen der Trübung hinzufügt; und
2. die gemäß Schritt 1 hergestellte Melaminharzlösung bei einem pH-Wert von 7 bis 10, bevorzugt bei 7,2 bis 9 und einer Temperatur von 50 bis 140°C weiter umsetzt, bis sie in eine Dispersion übergegangen.

Zur Einstellung des pH-Wertes dienen im allgemeinen Brönstedt-Laugen oder Säuren, oder puffernde Substanzen wie z.B. Dieethylethanolamin.

Die Umsetzung kann grundsätzlich nach den gleichen Methoden und in den gleichen Apparaten erfolgen, wie die Herstellung der allgemein bekannten Melaminharzlösungen.

Die Bildung einer dispersen Phase kann sehr einfach durch optische Beurteilung (Einsetzende Trübung) oder sehr viel exakter durch online-Trübungsmessung mittels einer faseroptischen Streulichtsonde bis zu einem bestimmten Trübungswert verfolgt werden.

Die Vermischung der in Schritt 1 gebildeten Reaktionsmischung mit den Schutzkolloiden ist unkritisch, der Einsatz von speziellen Rührorganen mit hoher Scherwirkung nicht erforderlich.

Nachdem das zunächst gelöste Melaminharz in eine Dispersion übergegangen ist, wird die Reaktion durch Abkühlung auf Normaltemperatur beendet und ein pH-Wert von 9 bis 10 wird eingestellt.

Das Melaminharz, das in den Melaminharzdispersionen in dispergierter Form vorliegt, weist im allgemeinen eine Glastemperatur von 0 bis 80, bevorzugt 20 bis 60°C und einen Energiegehalt von 20 bis 160 J/g (berechnet auf 100% Dispersion) auf.

Die Glastemperatur und der Energiegehalt lassen sich auf einfache Weise mittels DSC-Messungen (DSC: Differential Scanning Calorimetry) ermitteln.

Wann der gewünschte Energiegehalt und die Glastemperatur erreicht ist, läßt sich durch einen einfachen Vorversuch ermitteln, bei dem in Schritt 2 ca. alle 5 Minuten eine Probe entnommen wird und mittels DSC auf ihren Energiegehalt und ihre Glastemperatur untersucht wird.

Die Elastifizierungsmittel können grundsätzlich in jeder Phase der Herstellung oder im Anschluß daran zugesetzt werden. Bevorzugt erfolgt sie im Falle der Alkohole und Harnstoffderivate zu Reaktionsbeginn, im Falle der Amide zu einem späteren Zeitpunkt. Zugabezeitpunkt und Reaktionsführung entscheiden über den Einbau der Elastifizierungsmittel in die Harzmatrix und beeinflussen durch die resultierende unterschiedliche Verteilung in der dispersen Phase oder dem Serum die Produkteigenschaften.

Was die Gründe für die Trübung und die Wirkung des Schutzkolloids betrifft, so wird folgendes vermutet:

Die Bildung einer dispersen Phase resultiert aus der zunehmenden Hydrophobierung der Aminoplastkomponente im Kondensationsverlauf. Die Zunahme des Hydrophob-Charakters der Aminplastkomponente resultiert aus der Bildung übergeordneter Aggregate ohne Ausbildung kovalenter Bindungen zwischen den Methylolverbindungen und/oder der Erhöhung des Molekulargewichtes durch Bildung kovalenter Bindungen.

Der Beitrag, den beide Mechanismen zur Hydrophobierung liefern, bestimmt die Eigenschaften der Dispersion. Eine Unterscheidung beider Mechanismen ist durch Analyse der Produkte und der Zwischenstufen mittels quantitativer ¹³C-NMR-Spektroskopie und DSC möglich. Mit quantitativer ¹³C-NMR-Spektroskopie läßt sich das Verhältnis Methylen-, Methylenetherbrücken und Methylolgruppen bestimmen. Mit der DSC-Methode lassen sich die Glasübergangstemperatur und der Energiegehalt der Dispersion bestimmen und eine Aussage über den Kondensationsgrad treffen. Besonders gewünscht ist eine hoher Anteil an Methylolgruppen (^{>} 40 mol% bezogen auf detektierte CH₂-Gruppen aus Formaldehyd), und eine definitionsgemäße Glastemperatur und ein Energiegehalt. Geringere Energiegehalte liefern Dispersionen mit unzureichenden Eigenschaften.

Die Aggregation der sich abscheidenden Harzphase wird durch die verwendeten Schutzkolloide verhindert. Das kationische Schutzkolloid belegt die gebildete Grenzfläche und stabilisiert zunächst die Dispersion. Das anionische Schutzkolloid belegt nun seinerseits die kationische Grenzfläche was zur Umladung führt. Neben der so erreichten elektrostatischen Stabilisierung trägt überschüssiges anionisches Schutzkolloid über den Mechanismus der Verarmungsstabilisierung zur Stabilisierung der Dispersion bei. Ohne Zugabe des anionischen Schutzkolloides verdickt die Dispersion bei Lagerung und bildet dilatante Sedimente. Ohne kationisches Schutzkolloid werden lediglich grobteilige Dispersionen mit breiter Teilchengrößenverteilung (0,5 µm bis 500 µm) erhalten. Bevorzugt enthält die Reaktionsmischung solche Mengen an Wasser, daß der Feststoffgehalt der Reaktionsmischung 40 bis 70 Gew.-% beträgt. Da dies auch der bevorzugte Wert für die Melaminharzdispersion ist, erübrigt es sich dann, sie durch Zugabe von Wasser weiter zu verdünnen oder durch Destillation bei reduziertem Druck aufzukonzentrieren.

Die Viskosität der so hergestellten Melaminharzdispersionen liegt im allgemeinen bei 20 bis 300 mPas (bezogen auf eine Dispersion mit einem Feststoffgehalt von 50 %, gemessen bei 20°c).

Die Teilchengrößen betragen im Mittel von 0,05 µm bis 300 µm, bevorzugt 0,2 µm bis 5 µm.

Die Melaminharzdispersionen kommen im allgemeinen in Form von Zubereitungen, enthaltend
- die erfindungsgemäße Melaminharzdispersion
- gegebenenfalls 1 bis 200 Gew.%, bezogen auf die Gesamtmenge an Formaldehyd und Melamin in Form des Melaminharzes, eines ungehärteten Melaminharzes und/oder Harnstoffharzes in gelöster Form
- gegebenenfalls ein Verdicker oder Thixotropiermittel
zur Anwendung.

Als Melamin- oder Harnstoffharzlösungen, mit denen die Melaminharzdispersionen in Form der Zubereitungen eingesetzt werden, eignen sich handelsübliche Produkte, wie sie für die Papierimprägnierung empfohlen werden.

Die Zubereitungen eignen sich als Imprägnierstoffe vor allem zur Herstellung von Melaminharz-Imprägnaten. Sie sind in analoger Weise einsetzbar, wie die für dieses Anwendungsgebiet marktüblichen Produkte auf Basis von Melaminharzen.

Zu deren Herstellung werden Papiere, sogenannte Tränkpapiere, z.B. Dekor- und Kernlagenpapiere (Natronkraftpapiere), mit den Melaminharzen imprägniert. Dabei kommen die Melaminharze in Form einer 40 bis 70 gew.-%igen wässerigen Lösung zur Anwendung, der üblicherweise ein Härter zugesetzt wird.

Als Härter kommen Brønstedt-Säuren wie organische Sulfon- und Carbonsäuren sowie deren Anhydride, z.B. Maleinsäure, Maleinsäureanhydrid und Ameisensäure, Ammoniumverbindungen, z.B. Ammoniumsulfat, Ammoniumsulfit, Ammoniumnitrat, Ethanolaminhydrochlorid, Dimethylethanolammoniumsulfit sowie Härterkombinationen wie Morpholin/p-Toluolsulfonsäure in Betracht.

Die Härter können in Mengen von 0,1 bis 2,5 Gew.-%, bezogen auf das wäßrige Tränkharz, zugegeben werden. Dem Fachmann ist bekannt, daß die Härterdosierung den jeweiligen anwendungstechnischen Erfordernissen angepaßt werden kann, wobei die Reaktivität der Tränkharz/Härter-Gemische z.B. über die Messung der Trübungszeiten und Gelierzeiten entsprechend eingestellt werden kann.

Den Imprägnierflotten können zusätzlich Hilfsmittel wie Netzmittel zugesetzt werden. Als Netzmittel eignen sich zum Beispiel ethoxylierte Fettalkohole oder Alkylphenolethoxylate, die in Mengen von 0,2 bis 0,6 Gew.-%, bezogen auf die Harzlösung, zugesetzt werden können.

Die Art und Weise, wie die Imprägnierflotten zu Melaminharz-Imprägnaten weiterverarbeitet werden und wie die Beschichtung der Holzwerkstoffe mit diesen Imprägnaten erfolgt, ist dem Fachmann bekannt.

Verfahren, wie die Imprägnierflotten zu Melaminharz-Imprägnaten, die aus mehreren übereinanderliegenden Papieren aufgebaut sind, z.B. sog. Hochdruck-Laminaten (HPL) und kontinuierlich hergestellten Laminaten (CPL) weiterverarbeitet werden können, sind beispielsweise in der DE-A-41-39-961 und der DE-A-42-40-982 beschrieben.

Die erfindungsgemäßen Zubereitungen können sowohl nach dem einstufigen als auch nach dem zweistufigen Verfahren verarbeitet werden. Beim einstufigen Verfahren ist das das Papier füllende Harz im Serum der Abmischung enthalten, die versiegelnde Oberfläche wird durch das Harz der dispersen Phase gebildet. Beim zweistufigen Imprägnierverfahren wird zunächst das Dekorpapier mit 50-100% Festharz (bezogen auf das Papiergewicht) gefüllt und nach optionaler Vortrocknung weiteres Harz durch Tauchen, Rakeln oder Streichen auf die Ober- und/oder Unterseite der Papierbahn aufgebracht. Zur Füllung der Papierbahn werden vorzugsweise billigere Harnstoff-Formaldehyd-Tränkharze oder Mischungen aus Harnstoff-Formaldehyd- und Melamin-Formaldehyd-Tränkharzen eingesetzt. Die für die Produkteigenschaften maßgebliche Deckschicht besteht vorzugsweise aus reinem Melaminharz.

Die so hergestellten Filme oder Folien werden üblicherweise unter Druck und Temperaturen von >120°C selbstklebend auf Holzwerkstoffsubstrate verpresst oder auch mit Hilfe von Klebstoffen auf aufgeleimt.

Durch Aufpressen dieser Filme oder Folien auf Werkstoffe aus unterschiedlichen Materialien wie Holz, Kunststoffe, Faserverbundstoffe oder insbesondere Holzwerkstoffe, z.B. Sperrholz, Holzfaserplatten und insbesondere Spanplatten erhalten diese eine Oberfläche, die rißbeständig, glänzend und unempfindlich gegen Wasserdampf ist.

Einer der Hauptvorteile der erfindungsgemäßen Harzdispersionen liegt darin, daß das Melaminharz nicht hauptsächlich in Form kolloidaler Lösungen vorliegt und somit wesentliche Schwächen der vorbekannten Systeme wie geringe Lagerstabilität, begrenzte Wasserverdünnbarkeit und vorzeitige Verfilmung beim Trocknungsvorgang nicht aufweist.

### Experimenteller Teil

### A. Herstellung der Melaminharzdispersionen

### Beispiel 1 (Dispersionssynthese):

In einem 5 l Reaktor wurden 1395 g (18,6 mol) 40 % wässriger Formaldehyd, 168 g Diethylenglykol und 1293 g Wasser vorgelegt und mit 25 % NaOH auf einen pH-Wert von 8,8 eingestellt. Nach Zugabe von 1512 g Melamin wurde auf 100°C erhitzt. Während des Erwärmens löste sich das Melamin auf. Sobald eine klare Lösung erreicht war gab man 369 g einer 7 % Stärkelösung (Hi-Cat 21370) zu, aktivierte die automatische pH-Steuerung und kondensierte bei konstant pH: 8,8 bis zu einem Trübungspunkt von 85°C. Durch Zugabe von 25 % HNO₃ wurde der pH-Wert auf einen Wert von pH: 7,6 eingestellt und die Reaktionslösung bei diesem pH-Wert und 100°C bis zum Auftreten einer ersten Trübung weiterkondensiert. Nun gab man 64,8 g einer 20% Lösung von Lupasol FF 4243 (Copolymer aus 20% Acrylsäure, 20 % Acrylsäuremethylester, 59 % 2-Acrylamido-2-methylpropansulfonsäure und 1 % Styrol) in Wasser zu, stellte den pH-Wert mit 25 % NaOH auf einen pH-Wert von 8,2 und rührte 3 h bei 95°C. Anschliessend stellte man auf pH: 9,0 und ließ unter Rühren auf Raumtemperatur abkühlen.

Die erhaltenen MF-Tränkharzdispersion hatte einen Festgehalt von 44 %, eine Viskosität bei 20°C von 100 mPas, war sedimentationsstabil und für mindestens 10 Wochen verarbeitbar.

### Vergleichsbeispiel 2:

In einem 5l Reaktor wurden 1395 g (18,6 mol) 40% wässriger Formaldehyd, 168 g Diethylenglykol und 1293 g Wasser vorgelegt und mit 25 % NaOH auf einen pH-Wert von 8,8 eingestellt. Nach Zugabe von 1512 g Melamin wurde auf 100°C erhitzt. Während des Erwärmens löste sich das Melamin auf. Sobald eine klare Lösung erreicht war wurde die automatische pH-Steuerung aktiviert und die Mischung bei konstant pH: 8,8 bis zu einem Trübungspunkt von 45°C weiterkondensiert. Anschließend stellte man auf pH: 9,0 und ließ unter Rühren auf Raumtemperatur abkühlen.

Das erhaltene Melaminharz hatte einen Festgehalt von 44 %, eine Viskosität bei 20°C von 60 und war für ca. 5 Wochen verarbeitbar.

### Beispiel 3:

In einem 5l Reaktor wurden 1395 g (18,6 mol) 40 % wässriger Formaldehyd, 147 g Diethylenglykol und 708 g Wasser vorgelegt und mit 25 % NaOH auf einen pH-Wert von 8,8 eingestellt. Nach Zugabe von 1512 g Melamin wurde auf 100°C erhitzt. Während des Erwärmens löste sich das Melamin auf. Sobald eine klare Lösung erreicht war wurden 369 g einer 7 % Stärkelösung (Hi-Cat 21370) und 64,8 g einer 20 % Lösung von Lupasol FF 4243 in Wasser zugegeben, die automatische pH-Steuerung aktiviert und bei konstant pH: 8,8 bis zu einem Trübungspunkt von 85°C kondensiert. Durch Zugabe von 25 % HNO3 wurde der pH-Wert auf einen Wert von pH: 7,6 eingestellt und die Reaktionslösung bei diesem pH-Wert und 98°C bis zum Auftreten einer ersten Trübung weiterkondensiert. Man stellte den pH-Wert mit 25% HNO3 auf einen pH-Wert von 7,2 und rührte 3h bei 80°C. Anschließend stellte man auf pH: 9,0 und ließ unter Rühren auf Raumtemperatur abkühlen.

Die erhaltenen MF-Tränkharzdispersion hatte einen Festgehalt von 52%, eine Viskosität bei 20°C von 80 mPas, war sedimentationsstabil und für mindestens 10 Wochen verarbeitbar.

### Beispiel 4:

In einem 5 l Reaktor wurden 1395 g (18,6 mol) 40% wässriger Formaldehyd, 168 g Diethylenglykol und 1293 g Wasser vorgelegt und mit 25 % NaOH auf einen pH-Wert von 8,8 eingestellt. Nach Zugabe von 1512 g Melamin wurde auf 100°C erhitzt. Während des Erwärmens löste sich das Melamin auf. Sobald eine klare Lösung erreicht war, gab man 369 g einer 7% Stärkelösung (Hi-Cat 21370) und 64,8 g einer 20 % Lösung von Lupasol FF 4243 in Wasser zu. Zu diesem Zeitpunkt betrug der durch DSC bestimmte Energieinhalt der Harzlösung 170 J/g Festharz. Man aktivierte die automatische pH-Steuerung und kondensierte bei konstant pH: 8,8 bis zu einem Trübungspunkt von 50°C. Der Energieinhalt lag unverändert bei ca. 170 J/g Festharz. Durch Zugabe von 25 % HNO3 wurde der pH-Wert auf einen Wert von pH: 7,2 eingestellt und die Reaktionslösung auf 70°C abgekühlt. Nach kurzer Zeit trat Trübung auf. Die entstandene Dispersion wurde bei pH: 7,2 und 70°C für 4h weitergerührt. Nach 1h lag der Energieinhalt der Dispersion bei 130 J/g Festharz, nach 4h bei 83 J/g Festharz. Anschließend stellte man auf pH: 9,0 und ließ unter Rühren auf Raumtemperatur abkühlen.

Die erhaltenen MF-Tränkharzdispersion hatte einen Festgehalt von 44 %, eine Viskosität bei 20°C von 65 mPas, war sedimentationsstabil und für mindestens 10 Wochen verarbeitbar.

### Beispiel 5:

In einem 5l Reaktor wurden 1216 g (16,2 mol) 40% wässriger Formaldehyd, 147 g Diethylenglykol und 1127 g Wasser vorgelegt und mit 25 % NaOH auf einen pH-Wert von 8,8 eingestellt. Nach Zugabe von 1318 g Melamin (10,5 mol) wurde auf 100°C erhitzt. Während des Erwärmens löste sich das Melamin auf. Sobald eine klare Lösung erreicht war, gab man 322 g einer 7 % Stärkelösung (Hi-Cat 21370) und 56,5 g einer 20% Lösung von Lupasol FF 4243 in Wasser zu, aktivierte die automatische pH-Steuerung und kondensierte bei konstant pH: 8,8 bis zu einem Trübungspunkt von 85°C. Durch Zugabe von 25 % HNO3 wurde der pH-Wert auf einen Wert von pH: 7,6 eingestellt und die Reaktionslösung bei diesem pH-Wert und 98°C bis zum Auftreten einer ersten Trübung weiterkondensiert. Man stellte den pH-Wert mit 25 % HNO3 auf einen pH-Wert von 7,2 und rührte 6 h bei 95°C. Anschließend stellte man auf pH: 9,0 und ließ unter Rühren auf Raumtemperatur abkühlen.

Die erhaltenen MF-Tränkharzdispersion hatte einen Festgehalt von 43% eine Viskosität bei 20°C von 60 mPas und war sedimentationsstabil.

### Beispiel 6 (Vergleichsbeispiel):

In einem 5l Reaktor wurden 1479 g (19,7 mol) 40 % wässriger Formaldehyd, 148 g Diethylenglykol und 982 g Wasser vorgelegt und mit 25 % NaOH auf einen pH-Wert von 8,8 eingestellt. Nach Zugabe von 1603 g (12,7 mol) Melamin wurde auf 100°C erhitzt. Während des Erwärmens löste sich das Melamin auf. Sobald eine klare Lösung entstanden war, wurde die automatische pH-Steuerung aktiviert und die Mischung bei konstant pH: 8,8 bis zu einem Trübungspunkt von 46°C weiterkondensiert. Anschließend stellte man auf pH: 10,0 und ließ unter Rühren auf Raumtemperatur abkühlen.

Das erhaltene Melaminharz hatte einen Festgehalt von 54 %, eine Viskosität bei 20°C von 40mPas und war für ca. 5 Wochen verarbeitbar.

### Beispiel 7 (Vergleichsbeispiel nach Bsp. 4 der WO 97/07152)

Zunächst wurde ein Melaminharz aus 370 g wässrigem Formaldehyd (40 %), 320 g Wasser und 400 g Melamin bei konstant pH: 8,8 und 98°C bis zu einem Trübungspunkt von 42°C kondensiert. Das Produkt hat einen Feststoffgehalt von 49,8 % und ist ca. 4 Wochen lagerstabil.

Zu 1 kg dieses Harzes gibt man eine Mischung aus 1 kg Wasser und 7,2 g Avicel, die zuvor ca. 15 min bei hoher Scherung gerührt wurde und erhitzt auf 100°C. Es stellt sich ein pH-Wert von pH: 8,2 ein. Nach ca. 2,5 h tritt Trübung auf, nach acht Stunden wird abgekühlt.

Die erhaltene Mischung enthält Partikel in einer Größe von 2 µm bis 60 µm. Das Maximum liegt bei 25 µm. Die Mischung hat eine Viskosität von 140 mPas und einen Feststoffgehalt von 23,5 %.

Derartige Produkte sind schon alleine aufgrund ihres geringen Festgehaltes als Tränkharz ungeeignet. Der notwendige Harzauftrag läßt sich nur durch mehrmaliges imprägnieren und trocknen erzielen. Festgehalte über 40% sind mit diesem Verfahren aufgrund der stark ansteigenden Viskosität nicht erreichbar. Zudem zeigt die Erfahrung, daß Partikelgrößen über 20 µm zu unzureichenden Oberflächenqualitäten führen. Sie können bestenfalls in geringer Menge zu handelsüblichen Tränkharzen zugemischt werden.

### Imprägnierung:

DekorPapier mit einem Flächengewicht von 80 g/m2 wird mit Melamintränkharz KMT 787fl. (BASF AG) vorimprägniert (70 % Harzauftrag bezogen auf das Papiergewicht). Die Versuchsharze werden auf das vorimprägnierte Papier (schwarz und weiß) aufgerakelt und die so erhaltenen Filme auf eine Restfeuchte von 6-7 % getrocknet.

Anschließend werden die Filme auf eine handelsübliche 19 mm-Spanplatte gelegt und in einer Beschichtungspresse bei
20 bar/190°C/35 sec verpresst.

Kennzahlen der Harze:

**Tabelle 1**

| | Beispiel 3 | Beispiel 4 | Vergleich 5 | Vergleich 6 |
|---|---|---|---|---|
| Festgehalt (2h, 120°C) | 52 % | 44 % | 43 % | 54 % |
| Viskosität (20°C) | 80 mPas | 65 mPas | 60 mPas | 40 mPas |
| Mittlere Teilchengröße (µm) | 0,8 µm | 0,7 µm | 0,9 µm | - |
| Glastemperatur (°C) | 50°C | 65°C | 110°C | - |
| Energiegehalt lt. DSC (J/g Feststoff) | 83 J/g | 75 J/g | 45 J/g | 160 J/g |

Die Ergebnisse der anwendungstechnischen Prüfung der so hergestellten beschichteten Spanplatten können Tabelle 2 und 3 entnommen werden.

**Tabelle 2**

| Harz | Vergleich 2 | KMT 787fl. | Beispiel 1 |
|---|---|---|---|
| Härter (H 529, BASF) | 0,35 | 0,35 | 0,35 |
| Harzauftrag | 55 % | 55 % | 55 % |
| Nachimprägnierstufe | | | |
| Harzauftrag gesamt | 125 % | 125 % | 125 % |
| | | | |
| Härtung | 3 | 3 | 1-2 |
| Glanz | 20 | 24 | 105 |
| Geschlossenheit | 3-4 | 3-4 | 1 |
| Risse | 1 | 0 | 0 |
| Wasserdampf (Glanzverlust) | 45 % | 38 % | 5 % |
| Kratzfestigkeit (N) | 1,4 | 1,4 | 1,6 |
| Vergilbung | 3 3 | 3 | 3 |
| Schwarzgrad | 0,61 | 0,55 | 0,61 |

**Tabelle 3**

| Harz | KMT 787fl. | Beispiel 3 | Beispiel 4 | Vergleich 5 | Vergleich 6 |
|---|---|---|---|---|---|
| Härter (H 529, BASF | 0,32 | 0,3 | 0,3 | 0,3 | 0,3 |
| Harzauftrag | 42 % | 45 % | 47 % | 44 % | 43 % |
| Nachimprägnierstufe | | | | | |
| Harzauftrag gesamt | 112% | 115% | 117 % | 114 | 113 % |
| | | | | | |
| Härtung | 2 | 2 | 1-2 | 2-3 | 2-3 |
| Glanz | 20 | 84 | 86 | 69 | 21 |
| Geschlossenheit | 3-4 | 2 | 2 | 5 | 5-6 |
| Risse | 0 | 0 | 0 | 0 | 0 |
| Schwarzgrad | 0,58 | 0,55 | 0,57 | 1,1 - 3 | 0,68 |

Vorschriften für die Anwendungstechnische Prüfung der beschichteten Spanplatten und der DSC-Messungen

### Vergilbung

Um das Maß der thermischen Belastbarkeit des Harzes zu ermitteln wird die Vergilbung der Oberfläche mit einem heizbaren Stempel unter Druck bestimmt. Der Stempel des Testgeräts wird bei 225°C mit 5 N/mm2 auf die zu prüfende Oberfläche gedrückt. Der Grad der Vergilbung wird in einer Skala von 0-6 eingestuft.

### Beurteilung:

- 0 =: keine Vergilbung
- 1 =: sehr leichte Vergilbung
- 2 =: sichtbare Verfärbung
- 3 =: mäßig starke Verfärbung
- 4 =: starke Braunfärbung
- 5 =: sehr stake Braunfärbung
- 6 =: dunkelbraune Fläche

### Kratzfestigkeit

Das Verhalten der Oberfläche gegen Kratzbeanspruchung wird mit einem Ritzprüfgerät der Fa. Erichsen gemäß der in EN 438 beschriebenen Methode geprüft.

### Härtung

Die Güte der Härtung wird durch 16-stündige Einwirkung einer 0,2 n Salzsäure, die mit 0,004 Gew.-% Rhodamin B-Lösung angefärbt ist, auf die beschichtete Spanplatte ermittelt. Bei guter Härtung wird die Oberfläche nicht durch die Säure angegriffen. Die Stärke des Angriffs läßt sich anhand der Stärke der Rotfärbung beurteilen.

### Beurteilung:

- 0 =: kein Angriff
- 1 =: schwache Rosafärbung
- 2 =: deutliche Rotfärbung
- 3 =: starke Rotfärbung
- 4 =: starke Rotfärbung mit leichter Oberflächenquellung
- 5 =: starke Rotfärbung mit starker Oberflächenquellung
- 6 =: zerstörte Oberfläche

### Glanz

Die Glanzmessung erfolgt nach DIN 67 580 durch Reflexionsmessung eines Lichtstrahls im Einfallswinkel von 20°. Der Glanz ist umso besser, je höher der in % angegebene Anteil des reflektierten Lichtes ist.

### Geschlossenheit

Die Geschlossenheit oder Porigkeit der beschichteten Spanplatten-Oberfläche dient zur Beurteilung der Schmutzempfindlichkeit. Die zu prüfende Oberfläche wird mit schwarzer Schuhcreme eingerieben und anschließend mit einem Lappen wieder gereinigt. Die in den Poren verbleibende Schuhcreme ermöglicht eine Beurteilung der Geschlossenheit der Oberflächen.

Die Beurteilung der Oberflächengeschlossenheit erfolgt in folgenden Stufen:
- 0 =: porenfrei
- 1 =: vereinzelte Poren
- 2 =: wenige Poren
- 3 =: häufige Poren
- 4 =: viele offene Stellen
- 5 =: sehr viele offene Stellen
- 6 =: keine Geschlossenheit.

### Rißbeständigkeit

Die Rißbeständigkeit einer Oberfläche wird nach DIN 53 799 bestimmt. Die beschichtete Spanplatte wird über,einer Zeit von 24 h bei 70°C im Umlufttrockenschrank gelagert. Durch den Trocknungsprozeß treten Schrumpfspannungen auf, die in den Oberflächen zu einer Rißbildung führen. Eine Verschärfung des Tests kann durch Erhöhung der Trocknungstemperatur oder durch Anbohren der Oberfläche (Kerbwirkung) erreicht werden. Die Beurteilung der Rißbildung erfolgt nach folgender Skala:
- 0 =: keine Risse
- 1 =: vereinzelte kleine Risse
- 2 =: wenige Risse
- 3 =: mäßige Risse
- 4 =: häufige Risse
- 5 =: viele Risse
- 6 =: totale Rißbildung.

### Schwarzgrad

Die Schwarzgradmessung erfolgt nach D 3265 mit einem Tint Tester 527 mit Helligkeitsmeßkopf Tint Sensor. Der Meßbereich umfaßt 0-99,99 Helligkeitseinheiten, wobei Null als niedrigste Helligkeitsstufe (absolut schwarz) gilt. Bei Werten >0,8 ist bereits eine deutliche Vergrauung erkennbar.

Nach Eichung des Gerätes mit einem Standard wird der Prüfkörper dreimal vermessen und der Mittelwert als Schwarzgrad angegeben.

### DSC-Messungen

Die DSC (DSC: Differential Scanning Calorimetry) Messungen wurden durchgeführt mit einem DSC 912 + TA2000 der Firma TA Instruments. Es wurden Stahl-Hochdrucktiegel mit vergoldeten Kupferdichtungen (Maximaldruck 150 bar, Masse ca. 630 mg) von Fa. Perkin Elmer verwendet. Die Probeneinwaage lag typischerweise bei 20 - 25 mg. Die Temperaturkalibrierung des DSC-Gerätes erfolgte mit Wasser und Zinn, für die Enthalpiekalibrierung wurde Indium verwendet. Die Probe wurde bei Raumtemperatur eingebaut, dann zunächst auf - 20°C abgekühlt, danach erfolgte der 1. aufheizende Lauf mit einer Heizrate von 10 K/min bis 250°C. Die DSC-Kurven zeigen bei niedrigen Temperaturen zunächst einen Glasübergang gefolgt von einem ausgeprägten exothermen Wärmeflußpeak. Die Glastemperatur wurde als midpoint Glastemperatur nach DIN 53 765 ausgewertet. Von dem exothermen Peak wurde unter Verwendung einer linearen Basislinie die Reaktionsenthalpie durch Integration der Gesamtfläche zwischen DSC-Kurve und Basislinie bestimmt. Daraus wurde mit dem bekannten Feststoffanteil die auf diesen bezogene Enthalpie berechnet. Desweiteren wurde die Temperatur T_{R}^{max} des exothermen Peaks bestimmt, bei welchem der maximale Wärmefluß auftritt sowie dessen extrapolierte Onset-Temperatur.

## Patentansprüche

1. Wässrige Melaminharzdispersionen enthaltend als diskontinuierliche Phase ein Melaminharz, welches mit einer Kombination aus einem kationischen Schutzkolloid und einem anionischen Schutzkolloid stabilisiert ist.

2. Wässrige Melaminharzdispersionen nach Anspruch 1, wobei das Melaminharz aufgebaut ist aus
a) Melamin
b) pro Mol Melamin 1,3 bis 3,0 mol Formaldehyd
c) gegebenenfalls pro Mol Melamin bis 0,5 mol Harnstoff und
d) gegebenenfalls pro Mol Melamin 0,01 bis 0,3 mol einer sonstigen Verbindung, die fähig ist, mit Formaldehyd in einer Polykondensationsreaktion zu reagieren und
e) gegebenenfalls 1 bis 50 Gew.-%, bezogen auf das Melamin, eines Elastifizierungsmittels.

3. Wässrige Melaminharzdispersionen nach Anspruch 1 oder 2, wobei das anionische und das kationische Schutzkolloid in einer Gesamtmenge von 0,02 bis 6 Gew.-%, bezogen auf die Gesamtmenge an zur Herstellung des Melaminharzes eingesetztem Melamin und Formaldehyd, eingesetzt wird.

4. Wässrige Melaminharzdispersionen nach den Ansprüchen 1 bis 3, wobei das Gewichtsverhältnis an anionischem zu kationischem Schutzkolloid 0,02 : 1 bis 50 : 1 beträgt.

5. Wässrige Melaminharzdispersionen nach den Ansprüchen 1 bis 4, wobei es sich bei dem kationischen Schutzkolloid um kationische Stärke handelt.

6. Wässrige Melaminharzdispersionen nach den Ansprüchen 1 bis 5, wobei es sich bei dem anionischen Schutzkolloid um ein Copolymer aus Acrylsäure, Acrylsäuremethylester und 2-Acrylamido-2-methylpropansulfonsäure handelt.

7. Wässrige Melaminharzdispersionen nach den Ansprüchen 1 bis 6, wobei das Melaminharz eine Glastemperatur von 0 bis 80°C und einen Energiegehalt von 20 bis 160 J/g (berechnet auf 100 % Dispersion) aufweist.

8. Wässrige Melaminharzdispersionen nach den Ansprüchen 1 bis 7, wobei, das Melaminharz in Form von Teilchen mit einer mittleren Teilchengröße von 0,05 bis 30 µm vorliegt.

9. Wässrige Melaminharzdispersionen nach den Ansprüchen 1 bis 8, wobei, die Halbwertsbreite der Melaminharzteilchen 10 % bis 180 % der mittleren Teilchengröße beträgt.

10. Wässrige Melaminharzdispersionen nach den Ansprüchen 1 bis 9, wobei, enthaltend ein Elastifizierungsmittel.

11. Wässrige Melaminharzdispersionen nach Anspruch 10, wobei es sich bei dem Elastifizierungsmittel um ein- oder mehrwertige Alkohole, Aminoalkohole, Amide und Lactame, Ethanolamide, wobei die vorgenannten Elastifizierungsmittel auch in ethoxylierter Form eingesetzt werden können, 2-(5-Hydroxy-3-oxapentylamin)-1,3,5-triazin, 2,4-Di-(5hydroxy-3-oxapentylamin)-1,3,5-triazin, 2,4,6-Tris-(5hydroxy-3-oxapentylamin)-1,3,5-triazin sowie ferner um ethoxyliertes Melamin handelt.

12. Verfahren zur Herstellung der Melaminharzdispersionen, wobei man
1. in Schritt 1 zunächst aus den Komponenten a) bis d) gegebenenfalls in Anwesenheit des anionischen und des kationischen Schutzkolloids zunächst eine wässrige Lösung eines Melaminharzes herstellt und bei einem pH-Wert von 7 bis 10 und einer Temperatur von 50 bis 140°C weiter umsetzt, bis eine Trübung einsetzt, wobei man das anionische und des kationische Schutzkolloid spätestens beim Einsetzen der Trübung hinzufügt; und
2. die gemäß Schritt 1 hergestellte Melaminharzlösung bei einem pH-Wert von 7 bis 10 und einer Temperatur von 50 bis 140°C weiter umsetzt, bis sie in eine Dispersion übergegangen ist.

13. Verfahren nach Anspruch 12, **dadurch gekennzeichnet, daß** man das Elastifizierungsmittel der Reaktionsmischung oder dem Melaminharz zu einem beliebigen Zeitpunkt zusetzt.

14. Zubereitung, enthaltend
- eine wässerige Dispersion gemäß den Ansprüchen 1 bis 12
- gegebenenfalls 1 bis 200 Gew.%, bezogen auf die Gesamtmenge an Formaldehyd und Melamin in Form des Melaminharzes, ein ungehärtetes Melaminharz und/oder Harnstoffharz in gelöster Form
- gegebenenfalls ein Verdicker oder Thixotropiermittel.

15. Verfahren zur Herstellung einer Folie, indem man
- ein gegebenenfalls mit einem üblichen Melaminharz oder Harnstoffharz vorimprägniertes Dekorpapier mit der Zubereitung gemäß Anspruch 14 beschichtet; und
- das beschichtete gegebenenfalls vorbereitete Dekorpapier trocknet.

16. Folien, hergestellt nach Anspruch 15.

17. Verfahren zum Beschichten von Holzwerkstoffen, indem man die Folien gemäß Anspruch 16 auf die Oberflächen der Holzwerkstoffe klebt oder unter Anwendung von Druck oder Temperatur aufpreßt.

18. Beschichtete Holzwerkstoffe erhältlich nach Anspruch 17.

## Claims

1. An aqueous melamine resin dispersion comprising as discontinuous phase a melamine resin stabilized by a combination of a cationic protective colloid and an anionic protective colloid.

2. An aqueous melamine resin dispersion as claimed in claim 1, wherein the melamine resin is composed of
a) melamine
b) from 1.3 to 3.0 mol of formaldehyde per mole of melamine
c) if desired, up to 0.5 mol of urea per mole of melamine
d) if desired, from 0.01 to 0.3 mol of another compound capable of reacting with formaldehyde in a polycondensation reaction, per mole of melamine, and
e) if desired, from 1 to 50% by weight, based on the melamine, of an elasticizer.

3. An aqueous melamine resin dispersion as claimed in claim 1 or 2, wherein the anionic and the cationic protective colloid are used in an overall amount of from 0.02 to 6% by weight, based on the overall amount of melamine and formaldehyde used to prepare the melamine resin.

4. An aqueous melamine resin dispersion as claimed in any of claims 1 to 3, wherein the weight ratio of anionic to cationic protective colloid is from 0.02:1 to 50:1.

5. An aqueous melamine resin dispersion as claimed in any of claims 1 to 4, wherein said cationic protective colloid comprises cationic starch.

6. An aqueous melamine resin dispersion as claimed in any of claims 1 to 5, wherein said anionic protective colloid comprises a copolymer of acrylic acid, methyl acrylate and 2-acrylamido-2-methylpropanesulfonic acid.

7. An aqueous melamine resin dispersion as claimed in any of claims 1 to 6, wherein the melamine resin has a glass transition temperature of from 0 to 80°C and an energy content of from 20 to 160 J/g (calculated on the basis of a 100% dispersion).

8. An aqueous melamine resin dispersion as claimed in any of claims 1 to 7, wherein the melamine resin is in the form of particles having an average size of from 0.05 to 30 µm.

9. An aqueous melamine resin dispersion as claimed in any of claims 1 to 8, wherein the half-value width of the melamine resin particles is from 10% to 180% of the average particle size.

10. An aqueous melamine resin dispersion as claimed in any of claims 1 to 9 comprising an elasticizer.

11. An aqueous melamine resin dispersion as claimed in claim 10, wherein said elasticizer comprises monohydric or polyhydric alcohols, amino alcohols, amides and lactams, ethanolamides, it also being possible to use the abovementioned elasticizers in ethoxylated form, 2-(5-hydroxy-3-oxapentylamine)-1,3,5-triazine, 2,4-di(5-hydroxy-3-oxapentylamine)-1,3,5-triazine, 2,4,6-tris(5-hydroxy-3-oxapentylamine)-1,3,5-triazine and ethoxylated melamine.

12. A process for preparing a melamine resin dispersion, which comprises
1. in step 1, first preparing an aqueous solution of a melamine resin from components a) to d) in the presence or absence of the anionic and of the cationic protective colloid and continuing reaction at a pH of from 7 to 10 and at a temperature of from 50 to 140□C until cloudiness begins, the anionic and cationic protective colloids being added no later than at the onset of clouding; and
2. further reacting the melamine resin solution prepared in accordance with step 1 at a pH of from 7 to 10 and at a temperature of from 50 to 140□C until it has undergone transition to a dispersion.

13. A process as claimed in claim 12, wherein the elasticizer is added to the reaction mixture or to the melamine resin at any desired point in time.

14. A formulation comprising
- an aqueous dispersion as claimed in any of claims 1 to 12
- if desired, from 1 to 200% by weight, based on the overall amount of formaldehyde and melamine in the form of the melamine resin, of an uncured melamine resin and/or urea resin in dissolved form
- if desired, a thickener or thixotropic agent.

15. A process for producing a sheet, which comprises
- coating a decoration paper, which if desired has been preimpregnated with a customary melamine resin or urea resin, with the formulation as claimed in claim 14; and
- drying the coated and, if desired, prepared decoration paper.

16. A sheet produced as claimed in claim 15.

17. A method of coating a woodbase material, which comprises applying a sheet as claimed in claim 16 to the surface of the woodbase material by adhesive bonding or by pressing with the use of pressure or temperature.

18. A coated woodbase material obtainable as claimed in claim 17.

## Revendications

1. Dispersions aqueuses de résine de mélamine contenant, comme phase discontinue, une résine de mélamine qui est stabilisée par une combinaison d'un colloïde de protection cationique et d'un colloïde de protection anionique.

2. Dispersions aqueuses de résine de mélamine suivant la revendication 1, dans lesquelles la résine de mélamine est constituée
a) de mélamine,
b) de 1,3 à 3,0 moles de formaldéhyde par mole de mélamine,
c) éventuellement de jusqu'à 0,5 mole d'urée par mole de mélamine, et
d) éventuellement de 0,01 à 0,3 mole d'un autre composé qui est capable de réagir avec du formaldéhyde dans une réaction de polycondensation, par mole de mélamine, et
e) éventuellement de 1 à 50% en poids, par rapport à la mélamine, d'un agent élastifiant.

3. Dispersions aqueuses de résine de mélamine suivant la revendication 1 ou 2, dans lesquelles les colloïdes de protection anionique et cationique sont mis en oeuvre en une quantité globale de 0,02 à 6% en poids, par rapport à la quantité globale de la mélamine et du formaldéhyde mis en oeuvre pour la préparation de la résine de mélamine.

4. Dispersions aqueuses de résine de mélamine suivant les revendications 1 à 3, dans lesquelles le rapport pondéral entre colloïde de protection anionique et colloïde de protection cationique est de 0,02/1 à 50/1.

5. Dispersions aqueuses de résine de mélamine suivant les revendications 1 à 4, dans lesquelles, en ce qui concerne le colloïde de protection cationique, il s'agit d'amidon cationique.

6. Dispersions aqueuses de résine de mélamine suivant les revendications 1 à 5, dans lesquelles, en ce qui concerne le colloïde de protection anionique, il s'agit d'un copolymère d'acide acrylique, d'acrylate de méthyle et d'acide 2-acrylamido-2-méthylpropanesulfonique.

7. Dispersions aqueuses de résine de mélamine suivant les revendications 1 à 6, dans lesquelles la résine de mélamine présente une température de transition vitreuse de 0 à 80°C et une quantité d'énergie de 20 à 160 J/g (calculée sur 100% de dispersion).

8. Dispersions aqueuses de résine de mélamine suivant les revendications 1 à 7, dans lesquelles la résine de mélamine se présente sous la forme de particules ayant une taille moyenne de 0,05 à 30 µm.

9. Dispersions aqueuses de résine de mélamine suivant les revendications 1 à 8, dans lesquelles la largeur de valeur moyenne des particules de résine de mélamine est de 10% à 180% de la taille moyenne des particules.

10. Dispersions aqueuses de résine de mélamine suivant les revendications 1 à 9, contenant un agent élastifiant.

11. Dispersions aqueuses de résine de mélamine suivant la revendication 10, dans lesquelles, en ce qui concerne l'agent élastifiant, il s'agit de monoalcools ou de polyalcools, d'aminoalcools, d'amides et de lactames, d'éthanolamides, les agents élastifiants précités pouvant aussi être mis en oeuvre sous une forme éthoxylée, de 2-(5-hydroxy-3-oxapentylamine)-1,3,5-triazine, de 2,4-di-(5-hydroxy-3-oxapentylamine)-2,3,5-triazine, de 2,4,6-tris-(5-hydroxy-3-oxapentylamine)-1,3,5-triazine, ainsi qu'en outre de mélamine éthoxylée.

12. Procédé de préparation des dispersions de résine de mélamine, dans lequel
1. on prépare tout d'abord dans l'étape 1, à partir des composants a) à d), éventuellement en présence du colloïde de protection anionique et du colloïde de protection cationique, tout d'abord une solution aqueuse d'une résine de mélamine et on poursuit la réaction à une valeur de pH de 7 à 10 et à une température de 50 à 140°C jusqu'à déclenchement d'un trouble, le colloïde de protection anionique et le colloïde de protection cationique étant introduits au plus tard lors du déclenchement du trouble, et
2. on poursuit la réaction de la solution de résine de mélamine préparée selon l'étape 1 à une valeur de pH de 7 à 10 et à une température de 50 à 140°C, jusqu'à ce qu'elle soit transformée en une dispersion.

13. Procédé suivant la revendication 12, **caractérisé en ce qu'**on ajoute l'agent élastifiant au mélange réactionnel ou à la résine de mélamine à un moment quelconque.

14. Composition, contenant
une dispersion aqueuse suivant les revendications 1 à 12,
éventuellement 1 à 200% en poids, par rapport à la quantité globale de formaldéhyde et de mélamine sous la forme de la résine de mélamine, d'une résine d'urée et/ou de mélamine non durcie sous forme dissoute,
éventuellement un épaississant ou agent thixotrope.

15. Procédé de préparation d'une feuille, dans lequel on revêt un papier décoratif préimprégné éventuellement d'une résine de mélamine ou d'urée courante par la composition suivant la revendication 14, et on sèche le papier décoratif revêtu, éventuellement préalablement traité.

16. Feuilles, préparées selon la revendication 15.

17. Procédé de revêtement de matériaux dérivés du bois, dans lequel on colle ou presse par application d'une pression ou d'une température les feuilles selon la revendication 16 sur les surfaces des matériaux dérivés du bois.

18. Matériaux dérivés du bois revêtus, que l'on peut obtenir selon la revendication 17.
